# EUROPÄISCHE PATENTSCHRIFT

(11) **EP 2 060 827 B1**
(45) Veröffentlichungstag und Bekanntmachung des Hinweises auf die Patenterteilung: **07.09.2011**
(21) Anmeldenummer: 07120719.5
(22) Anmeldetag: 14.11.2007
(51) Int. Cl.: F16H 3/00, F16H 3/093

(54) **Verwendung eines Doppelkupplungsgetriebes in zwei Getriebevarianten**
Application of a dual clutch transmission in two different transmission types
Utilisation d'un engrenage à double embrayage dans deux variantes d'engrenages

(43) Veröffentlichungstag der Anmeldung: 20.05.2009
(73) Patentinhaber: Getrag Ford Transmissions GmbH, 50735 Köln (DE)
(72) Erfinder: Chazotte, Jean-Pierre, 50226, Frechen (DE)

(56) Entgegenhaltungen:
- EP-A- 1 424 509
- EP-A- 1 826 457
- DE-A1-102004 012 909

## Beschreibung

Die Erfindung betrifft ein Verfahren zur Weiterentwicklung eines Doppelkupplungsgetriebes für Kraftfahrzeuge in zumindest zwei Getriebevarianten gemäß dem Oberbegriff des Anspruches 1.

Aus der DE 10 2004 012 909 A1 ist ein Doppelkupplungsgetriebe gemäß dem Oberbegriff des Anspruches 1 bekannt. Das Doppelkupplungsgetriebe umfasst dabei eine erste Eingangswelle mit einer ersten Gruppe von Festrädern und eine zweite Eingangswelle mit einer zweiten Gruppe von Festrädern. Die Festräder kämmen dabei mit Losrädern, die auf einer ersten Vorgelegewelle bzw. auf einer zweiten Vorgelegewelle angeordnet sind. Jedem Losrad, das mit einem Festrad aus der ersten Gruppe von Festrädern kämmt, kann ein ungerader Vorwärtsgang I, III, V, VII zugeordnet werden. Entsprechend kann jedem Losrad, das mit einem Festrad aus der zweiten Gruppe von Festrädern kämmt, ein gerader Vorwärtsgang II, IV, VI zugeordnet werden.

Die einzelnen Losräder lassen sich durch Gangschaltkupplungen drehfest mit der jeweiligen Vorgelegewelle verbinden. Somit ist ein Drehmomentfluss von einer der Eingangswellen über ein Festrad und ein mit dem Festrad kämmendes Losrad auf eine der Vorgelegewellen möglich, wobei zur Drehmomentübertragung auf die Vorgelegewelle das Losrad über die zugehörige Gangschaltkupplung geschaltet sein muss.

Das Doppelkupplungsgetriebe der DE 10 2004 012 909 A1 weist zwei sogenannte Abhängigkeiten auf. Eine Abhängigkeit liegt vor, wenn zwei Losräder mit einem gleichen Festrad kämmen. Während die eine Abhängigkeit durch die Losräder eines fünften Vorwärtsganges V bzw. eines siebten Vorwärtsganges VII mit entsprechendem Festrad gebildet wird, wird die andere Abhängigkeit durch die Losräder eines vierten Vorwärtsganges IV bzw. eines sechsten Vorwärtsganges VI gebildet.

Durch das Vorsehen einer oder mehrerer Abhängigkeiten lassen sich in einem Doppelkupplungsgetriebe kleine axiale Bauhöhen realisieren, was bei Kraftfahrzeugen mit quer eingebautem Verbrennungsmotor gewünscht ist. Ein Nachteil der Abhängigkeiten besteht darin, dass eine Änderung einer Übersetzung eines Vorwärtsganges, unweigerlich auch die Übersetzung des Vorwärtsganges des anderen, in der Abhängigkeit befindlichen Losrades geändert wird. Dies macht es schwierig, ein Doppelkupplungsgetriebe, das hinsichtlich seiner Abstufungsverhältnisse an einen bestimmten Verbrennungsmotor im Kraftfahrzeug angepasst worden ist, auf einen anderen Verbrennungsmotor mit anderer Drehzahlcharakteristik oder anderem verfügbaren Drehzahlband optimal abzustimmen. Dies kann zum Teil zu erheblichen konstruktiven Modifikationen im Doppelkupplungsgetriebe führen, was regelmäßig mit hohen Kosten verbunden ist.

Die EP 1 826 457 A2 offenbart diverse Getriebevarianten eines Doppelkupplungsgetriebes mit mehreren Gängen. Einige der Getriebevarianten weisen eine Abhängigkeit auf, bei denen zwei Lösräder mit einem auf einer Eingangswelle sitzenden Festrad kämmen. Die Getriebevarianten unterscheiden sich jedoch teilweise deutlich in ihrem prinzipiellen Aufbau.

Die EP 1 424 509 A1 offenbart ein Zahnradgetriebe in zwei Getriebevarianten, wobei die Getriebevarianten jeweils eine Abhängigkeit (zwei Lösräder kämmen mit einem Festrad) aufweisen. Während in der einen Getriebevariante den Lösrädern der Abhängigkeit ein vierter und sechster Vorwärtsgang zugeordnet sind, sind in der anderen Getriebevariante den Losrädern der Abhängigkeit ein dritter und vierter Vorwärtsgang zugeordnet.

Der Erfindung liegt daher die Aufgabe zugrunde, ein Doppelkupplungsgetriebe so weiterzuentwickeln, dass für verschiedene Getriebevarianten verschiedene Getriebeabstufungen möglich sind, wobei sich die Getriebevarianten möglichst wenig konstruktiv voneinander unterscheiden sollen.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Erfindungsgemäß ist vorgesehen, dass für zwei Getriebevarianten des Doppelkupplungsgetriebes die Abhängigkeit an der gleichen Position verbleibt, jedoch die in der Abhängigkeit befindlichen Losräder unterschiedliche Durchmesser erhalten, um unterschiedliche Übersetzungen zu realisieren, wobei mindestens einem der in der Abhängigkeit befindlichen Losräder ein anderer Vorwärtsgang zugeordnet wird.

In einem bevorzugten Ausführungsbeispiel weist eine erste Getriebevariante eine Abhängigkeit mit Losrädern auf, denen ein dritter Vorwärtsgang beziehungsweise ein fünfter Vorwärtsgang zugeordnet sind, während eine zweite Getriebevariante auf der gleichen Position eine Abhängigkeit mit Losrädern aufweist, denen der fünfte Vorwärtsgang beziehungsweise ein siebter Vorwärtsgang zugeordnet sind. Somit handelt es sich bei diesem Ausführungsbeispiel um nur ungerade Gänge. Es ist auch möglich, dass sich die Abhängigkeit auf gerade Gänge bezieht. So könnte beispielsweise eine erste Getriebevariante eine Abhängigkeit mit Losrädern des zweiten und des vierten Vorwärtsganges aufweisen, während eine zweite Getriebevariante eine Abhängigkeit mit Losrädern des vierten und des sechsten Vorwärtsganges aufweist. Aufgrund der unterschiedlich großen Losräder müssen entsprechend die Durchmesser der mit den Losrädern kämmenden Festrädern angepasst werden, da für beide Getriebevarianten die Anordnung der Getriebewellen (die beiden Eingangswellen und die beiden Vorgelegewellen) gleich bleibt und nicht verändert wird.

Konstruktiv gesehen ändern sich dabei die auszutauschenden Zahnräder (Losräder, Festräder) nicht, da sie zumindest teilweise lediglich eine neue Verzahnung mit unterschiedlichen Wälzkreisdurchmessern erhalten, die prinzipiellen Abmessungen jedoch, wie Bohrungsdurchmesser, Baulänge, Lage und Befestigung auf den Wellen, Schaltverzahnung und so weiter, sich nicht ändern. Alle anderen wesentlichen Bauteile des Getriebes, wie die Getriebewellen, das Gehäuse, die Gangschaltkupplungen sind bei beiden Getriebevarianten identisch oder nahezu identisch. Lediglich eine Betätigungsvorrichtung, mit der die einzelnen Gangschaltkupplungen geschaltet werden, muss auf die unterschiedliche Anordnung der Vorwärtsgänge bei den zwei Getriebevarianten angepasst werden. Bei einem Doppelkupplungsgetriebe, das automatisiert mittels Schaltaktuatoren geschaltet wird, ist dies aber mit geringem Aufwand verbunden.

Zur Realisierung eines Rückwärtsganges kann eine Zwischenwelle vorgesehen sein, die wenigstens ein Festrad trägt, das einerseits mit einem Festrad auf einer der beiden Eingangswellen und mit einem Losrad auf der ersten oder zweiten Vorgelegewelle kämmt. Das Losrad, das mit dem auf der Zwischenwelle sitzenden Festrad kämmt, lässt sich wie die Losräder der Vorwärtsgänge über eine Gangschaltkupplung drehfest mit der entsprechenden Vorgelegewelle verbinden, so dass ein Drehmoment von der ersten oder zweiten Eingangswelle über die Zwischenwelle auf die entsprechende Vorgelegewelle übertragen wird.

Beide Getriebevarianten weisen vorzugsweise sieben Vorwärtsgänge auf. Es können auch weitere Vorwärtsgänge realisiert sein. Beispielsweise können in einem Doppelkupplungsgetriebe acht Vorwärtsgänge vorgesehen sein.

Neben der oben beschriebenen Abhängigkeit kann eine weitere Abhängigkeit mit weiteren Losrädern bestehen, denen nur gerade beziehungsweise nur ungerade Vorwärtsgänge zugeordnet sind. So können eine erste Abhängigkeit mit Losrädern ungerader Vorwärtsgänge sowie eine zweite Abhängigkeit mit Losrädern gerader Vorwärtsgänge vorgesehen sein. Den in der weiteren Abhängigkeit befindlichen Losrädern kann beispielsweise ein vierter beziehungsweise ein sechster Vorwärtsgang zugeordnet sein. Bei einem Getriebe mit acht Vorwärtsgängen kann den Losrädern der zweiten Abhängigkeit auch der sechste Vorwärtsgang und ein achter Vorwärtsgang zugeordnet sein.

Zudem ist eine erfindungsgemäße Ausführung möglich, bei der die erste Getriebevariante eine Abhängigkeit mit Losrädern aufweist, denen der vierte bzw. der sechste Vorwärtsgang zugeordnet sind, während die zweite Getriebevariante eine Abhängigkeit mit Losrädern aufweist, denen der sechste Vorwärtsgang bzw. der achte Vorwärtsgang zugeordnet sind.

Die im obigen Absatz beschriebenen Getriebevarianten können jeweils eine weitere Abhängigkeit mit Losrädern aufweisen, denen der dritte Vorwärtsgang bzw. der fünfte Vorwärtsgang zugeordnet sind. Die weitere Abhängigkeit kann alternativ Losräder umfassen, denen der fünfte bzw. der siebte Vorwärtsgang zugeordnet sind.

Weitere vorteilhafte Ausgestaltungen der Erfindung können der Zeichnung entnommen werden. Es zeigen:
- Figur 1: eine schematisierte Darstellung eines erfindungsgemäßen Doppelkupp- lungsgetriebes; und
- Figur 2: eine schematisierte Darstellung des erfindungsgemäßen Doppelkupp- lungsgetriebes mit einer geänderten Anordnung von Vorwärtsgängen.

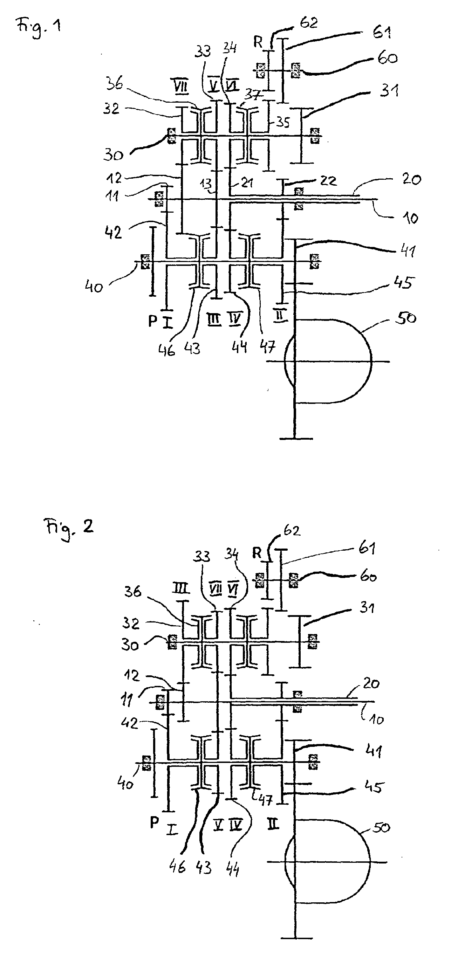

In den Figuren 1 und 2 sind zwei Getriebevarianten eines erfindungsgemäßen Doppelkupplungsgetriebes mit jeweils sieben Vorwärtsgängen I bis VII und einem Rückwärtsgang R schematisch dargestellt. Die folgenden Ausführungen beziehen sich zunächst nur auf die Getriebevariante der Figur 1, gelten aber sinngemäß bis auf geringe Abweichungen, auf die unten eingegangen wird, auch für die Getriebevariante der Figur 2. Deswegen sind in Figur 2 Bauteile und Merkmale, die zu Bauteilen und Merkmalen der Figur 1 identisch sind, mit gleichen Bezugszeichen versehen.

Das Doppelkupplungsgetriebe der Figur 1 weist eine erste Eingangswelle 10 und eine zweite Eingangswelle 20 auf. Die erste Eingangswelle 10 ist als Vollwelle ausgebildet, während die zweite Eingangswelle 20 eine Hohlwelle ist, die koaxial zur ersten Eingangswelle 10 angeordnet ist. Somit weisen die Eingangswellen 10, 20 eine gemeinsame Drehachse auf. Parallel zu der ersten Eingangswelle 10 und der zweiten Eingangswelle 20 sind eine erste Vorgelegewelle 30 und eine zweite Vorgelegewelle 40 angeordnet. Die erste Vorgelegewelle 30 ist über ein drehfest mit der ersten Vorgelegewelle 30 verbundenes Zahnrad 31 mit einem Abtrieb 50 in Form eines Differentials verbunden. Entsprechend trägt die zweite Vorgelegewelle 40 ein Zahnrad 41, was ebenfalls mit dem Abtrieb 50 gekoppelt ist. Eine Doppelkupplung, bestehend aus zwei Einzelkupplungen, ist in Figur 1 nicht dargestellt.

Auf der ersten Eingangswelle 10 sind drei Festräder 11, 12, 13 drehfest angeordnet, die mit Losrädern 32, 33, 42, 43 kämmen. Dabei kämmt das auf der ersten Eingangswelle 10 sitzende Festrad 11 mit dem Losrad 42, welches auf der zweiten Vorgelegewelle 40 angeordnet ist. Das Festrad 12 kämmt mit dem Losrad 32 auf der ersten Vorgelegewelle 30. Das Festrad 13 kämmt sowohl mit dem Losrad 33 auf der ersten Vorgelegewelle 30 als auch mit dem Losrad 43 auf der zweiten Vorgelegewelle 40. Die Zahnräder (Losräder, Festräder) 13, 33, 43 bilden somit eine erste Abhängigkeit.

Die zweite Eingangswelle 20 trägt zwei Festräder 21, 22, die mit Losrädern 34, 44, 45 kämmen. Dabei kämmt das Festrad 21 gleichzeitig mit den Losrädern 34 und 44, wodurch eine zweite Abhängigkeit gebildet ist. Das Festrad 22 kämmt mit dem Losrad 45 und einem Festrad 61, das auf einer Zwischenwelle 60 drehfest angeordnet ist. Die Zwischenwelle 60 trägt ein weiteres Festrad 62, das mit einem auf der ersten Vorgelegewelle 30 sitzenden Losrad 35 kämmt. So ergibt sich eine dritte Abhängigkeit, die aus Festrad 22 und Losrädern 45, 35 einschließlich der Festräder 61, 62 auf der Zwischenwelle 60 besteht.

Dem Losrad 42 ist der erste Vorwärtsgang I zugeordnet. Dieser erste Vorwärtsgang I ist eingelegt, wenn eine Gangschaltkupplung 46 so geschaltet ist, dass sie das Losrad 42 drehfest mit der zweiten Vorgelegewelle 40 verbindet. In diesem Fall kann das Doppelkupplungsgetriebe ein Drehmoment von der ersten Eingangswelle 10 über das Festrad 11, das Losrad 42 auf die zweite Vorgelegewelle 40 übertragen, wobei letztlich über das Zahnrad 41 das Drehmoment zum Abtrieb 50 gelangt. In einer anderen Schaltstellung verbindet die Gangschaltkupplung 46 das Losrad 43 drehfest mit der zweiten Vorgelegewelle 40, so dass dann die miteinander kämmenden Zahnräder 13, 43 einen Drehmomentfluss von der ersten Eingangswelle 10 über die zweite Vorgelegewelle 40 auf den Abtrieb 50 ermöglichen. Damit wäre der dritte Vorwärtsgang III eingelegt.

Neben der Gangschaltkupplung 46 weist das Doppelkupplungsgetriebe weitere Gangschaltkupplungen 36, 37 und 47 auf, durch die, analog zur Gangschaltkupplung 46, jeweils zwei Losräder wahlweise drehfest mit der ersten Vorgelegewelle 30 oder der zweiten Vorgelegewelle 40 verbunden werden können. Jedem Losrad 32, 33, 34, 35, 42, 43, 44, 45 kann somit einer der Vorwärtsgänge I bis VII beziehungsweise ein Rückwärtsgang R zugeordnet werden. Ist beispielsweise über die Gangschaltkupplung 37 das Losrad 35 drehfest mit der ersten Vorgelegewelle 30 verbunden, ist der Rückwärtsgang R eingelegt. Der Drehmomentfluss erfolgt dabei von der zweiten Eingangswelle 20 über die Zwischenwelle 60 und die erste Vorgelegewelle 30 auf den Abtrieb 50, wobei die Zwischenschaltung der Zwischenwelle 60 für die nötige Drehrichtungsumkehr im Doppelkupplungsgetriebe sorgt.

Wie der Figur 1 zu entnehmen ist, können der ersten Abhängigkeit, die aus den Zahnrädern 13, 33, 43 gebildet ist, somit der dritte Vorwärtsgang III und der fünfte Vorwärtsgang V zugeordnet werden. Der zweiten Abhängigkeit (bestehend aus Festrad 21 und den Losrädern 34, 44) können der vierte Vorwärtsgang IV und der sechste Vorwärtsgang VI zugeordnet werden.

Durch die Wahl der wirksamen Durchmesser der Zahnräder werden die Übersetzungen in den Gängen des Doppelkupplungsgetriebes festgelegt. Das Doppelkupplungsgetriebe lässt sich somit auf die Drehmomentcharakteristik eines Verbrennungsmotors optimal abstimmen.

Soll das Doppelkupplungsgetriebe mit einem anderen Verbrennungsmotor zusammenwirken (beispielsweise anstatt eines Benzinmotors mit einem Dieselmotor) kann erfindungsgemäß der prinzipielle Aufbau des Getriebes beibehalten werden, es müssen lediglich die Zahnräder ausgetauscht werden, um andere Übersetzungen oder Abstufungsverhältnisse zu realisieren. Alle anderen Komponenten des Doppelkupplungsgetriebes können jedoch unverändert bleiben.

Die Getriebevariante gemäß Figur 2 unterscheidet sich von der Getriebevariante gemäß Figur 1 nur in der Anordnung der Vorwärtsgänge III, V und VII. Im Gegensatz zur Getriebevariante gemäß Figur 1 wird die erste Abhängigkeit durch Losräder des fünften und siebten Vorwärtsganges V, VII gebildet, während der dritte Vorwärtsgang III nun dem Losrad 32 auf der ersten Vorgelegewelle 30 zugeordnet ist. Um unterschiedliche Übersetzungen in den einzelnen Vorwärtsgängen I bis VII zu erhalten, sind die Durchmesser der Zahnräder in der Getriebevariante gemäß Figur 2 gegenüber den Durchmessern der Zahnräder in der Getriebevariante gemäß Figur 1 zumindest für die Vorwärtsgänge III bis VII geändert worden. Somit kann eine Getriebevariante mit geänderten Übersetzungen ohne großen konstruktiven Aufwand bereitgestellt werden.

## Patentansprüche

1. Verfahren zur Weiterentwicklung eines Doppelkupplungsgetriebes für Kraftfahrzeuge, welches für zwei Getriebevarianten unterschiedliche Abstufungsverhältnisse aufweist,
- wobei die Getriebevarianten jeweils aufweisen:
- eine erste Eingangswelle (10) mit einer ersten Gruppe von Festrädern (11, 12, 13),
- eine zweite Eingangswelle (20) mit einer zweiten Gruppe von Festrädern (21, 22), und
- eine erste Vorgelegewelle (30) sowie eine zweite Vorgelegewelle (40), auf denen Losräder (32, 33, 34, 35, 42, 43, 44, 45) angeordnet sind,
- wobei die Losräder (32, 33, 34, 35, 42, 43, 44, 45) auf den Vorgelegewellen (30, 40) mit zugeordneten Festrädern (11, 12, 13, 21, 22) auf der Eingangswelle (10, 20) kämmen,
- wobei einem Losrad (32, 33, 42, 43), das mit einem Festrad aus der ersten Gruppe von Festrädern (11, 12, 13) kämmt, ein ungerader Vorwärtsgang (I, III, V, VII) zugeordnet werden kann;
- wobei einem Losrad (34, 44, 45), das mit einem Festrad aus der zweiten Gruppe von Festrädern (21, 22) kämmt, ein gerader Vorwärtsgang (II, IV, VI) zugeordnet werden kann;
- wobei zumindest zwei Losräder (33, 43) mit einem gleichen Festrad (13) aus der ersten Gruppe oder zweiten Gruppe von Festrädern kämmen, wodurch eine Abhängigkeit gebildet ist; und
- wobei die Losräder (32, 33, 34, 35, 42, 43, 44, 45) durch Gangsschaltkupplungen (36, 37, 46, 47) drehfest mit der ersten oder zweiten Vorgelegewelle (30, 40) schaltbar sind;
- wobei bei beiden Getriebevarianten den in der Abhängigkeit befindlichen Losrädern entweder nur gerade Vorwärtsgänge (II, IV, VI) oder nur ungerade Vorwärtsgänge (I, III, V, VII) zugeordnet sind
**dadurch gekennzeichnet, dass** ausgehend von einer ersten Getriebevariante für eine zweite Getriebevariante die Abhängigkeit an der gleichen Position verbleibt, jedoch die in der Abhängigkeit befindlichen Losräder unterschiedliche Durchmesser erhalten, um unterschiedliche Übersetzungen zu realisieren, wobei in der zweiten Getriebevariante mindestens einem der in der Abhängigkeit befindlichen Losräder ein anderer Vorwärtsgang als in der ersten Getriebevariante zugeordnet wird.

2. Verfahren nach Anspruch 1, **dadurch gekennzeichnet, dass** die erste Getriebevariante eine Abhängigkeit mit Losrädern (33, 43) aufweist, denen ein dritter Vorwärtsgang (III) bzw. ein fünfter Vorwärtsgang (V) zugeordnet sind, und dass die zweite Getriebevariante eine Abhängigkeit mit Losrädern (33, 43) aufweist, denen der fünfte Vorwärtsgang (V) bzw. ein siebter Vorwärtsgang (VII) zugeordnet sind.

3. Verfahren nach Anspruch 1 oder 2, **dadurch gekennzeichnet, dass** beide Getriebevarianten sieben Vorwärtsgänge (I bis VII) aufweisen.

4. Verfahren nach einem der Ansprüche 1 bis 3, **dadurch gekennzeichnet, dass** eine weitere Abhängigkeit mit weiteren Losrädern (34, 44) besteht, denen gerade Vorwärtsgänge (IV, VI) zugeordnet sind.

5. Verfahren nach Anspruch 4, **dadurch gekennzeichnet, dass** den in der weiteren Abhängigkeit befindlichen Losrädern ein vierter Vorwärtsgang (IV) bzw. ein sechster Vorwärtsgang (VI) zugeordnet sind.

6. Verfahren nach Anspruch 1, **dadurch gekennzeichnet, dass** die erste Getriebevariante eine Abhängigkeit mit Losrädern aufweist, denen ein vierter Vorwärtsgang bzw. ein sechster Vorwärtsgang zugeordnet sind, und dass die zweite Getriebevariante eine Abhängigkeit mit Losrädern aufweist, denen der sechste Vorwärtsgang bzw. ein achter Vorwärtsgang zugeordnet sind.

7. Verfahren nach Anspruch 6, **dadurch gekennzeichnet, dass** eine weitere Abhängigkeit mit weiteren Losrädern besteht, denen ein dritter Vorwärtsgang bzw. ein fünfter Vorwärtsgang oder alternativ der fünfte Vorwärtsgang bzw. ein siebter Vorwärtsgang zugeordnet sind.

## Claims

1. Method for further developing a double clutch gearbox for motor vehicles which has different stepping ratios for two gearbox variants,
- the gearbox variants each having:
- a first input shaft (10) with a first group of fixed wheels (11, 12, 13),
- a second input shaft (20) with a second group of fixed wheels (21, 22), and
- a first countershaft (30) and a second countershaft (40) on which loose wheels (32, 33, 34, 35, 42, 43, 44, 45) are arranged,
- the loose wheels (32, 33, 34, 35, 42, 43, 44, 45) on the countershafts (30, 40) meshing with associated fixed wheels (11, 12, 13, 21, 22) on the input shaft (10, 20),
- it being possible for a loose wheel (32, 33, 42, 43) which meshes with a fixed wheel from the first group of fixed wheels (11, 12, 13) to be assigned an odd-numbered forward gear (I, III, V, VII);
- it being possible for a loose wheel (34, 44, 45) which meshes with a fixed wheel from the second group of fixed wheels (21, 22) to be assigned an even-numbered forward gear (II, IV, VI) ;
- at least two loose wheels (33, 43) meshing with the same fixed wheel (13) from the first group or second group of fixed wheels, thereby forming a dependent pairing; and
- it being possible for the loose wheels (32, 33, 34, 35, 42, 43, 44, 45) to be connected to the first or second countershaft (30, 40) for conjoint rotation therewith by means of gearshift clutches (36, 37, 46, 47);
- it being the case in both gearbox variants that the loose wheels in the dependent pairing are assigned either only even-numbered forward gears (II, IV, VI) or only odd-numbered forward gears (I, III, V, VII),
**characterized in that**,
taking a first gearbox variant as a starting point, for a second gearbox variant, the dependent pairing remains at the same position but the loose wheels in the dependent pairing are provided with different diameters in order to realize different transmission ratios, it being the case in the second gearbox variant that at least one of the loose wheels in the dependent pairing is assigned a different forward gear than in the first gearbox variant.

2. Method according to Claim 1, **characterized in that** the first gearbox variant has a dependent pairing with loose wheels (33, 43) to which are assigned a third forward gear (III) and a fifth forward gear (V) respectively, and **in that** the second gearbox variant has a dependent pairing with loose wheels (33, 43) to which are assigned the fifth forward gear (V) and a seventh forward gear (VII) respectively.

3. Method according to Claim 1 or 2, **characterized in that** both gearbox variants have seven forward gears (I to VII).

4. Method according to one of Claims 1 to 3, **characterized in that** a further dependent pairing with further loose wheels (34, 44) is formed to which are assigned even-numbered forward gears (IV, VI).

5. Method according to Claim 4, **characterized in that** the loose wheels in the further dependent pairing are assigned a fourth forward gear (IV) and a sixth forward gear (VI) respectively.

6. Method according to Claim 1, **characterized in that** the first gearbox variant has a dependent pairing with loose wheels to which are assigned a fourth forward gear and a sixth forward gear respectively, and **in that** the second gearbox variant has a dependent pairing with loose wheels to which are assigned the sixth forward gear and an eighth forward gear respectively.

7. Method according to Claim 6, **characterized in that** a further dependent pairing with further loose wheels is formed to which are assigned a third forward gear and a fifth forward gear respectively or alternatively the fifth forward gear and a seventh forward gear respectively.

## Revendications

1. Procédé pour perfectionner une transmission à double embrayage pour véhicules automobiles, qui présente, pour deux variantes de transmission, des rapports étagés différents,
- les variantes de transmission présentant à chaque fois :
- un premier arbre d'entrée (10) avec un premier groupe de roues fixes (11, 12, 13),
- un deuxième arbre d'entrée (20) avec un deuxième groupe de roues fixes (21, 22), et
- un premier arbre intermédiaire (30) ainsi qu'un deuxième arbre intermédiaire (40), sur lesquels sont disposés des pignons fous (32, 33, 34, 35, 42, 43, 44, 45),
- les pignons fous (32, 33, 34, 35, 42, 43, 44, 45) sur les arbres intermédiaires (30, 40) s'engrenant avec des roues fixes associées (11, 12, 13, 21, 22) sur l'arbre d'entrée (10, 20),
- un pignon fou (32, 33, 42, 43), qui s'engrène avec une roue fixe du premier groupe de roues fixes (11, 12, 13) pouvant être associé à un rapport de marche avant impair (I, III, V, VII) ;
- un pignon fou (34, 44, 45), qui s'engrène avec une roue fixe du deuxième groupe de roues fixes (21, 22), pouvant être associé à un rapport de marche avant pair (II, IV, VI) ;
- au moins deux pignons fous (33, 43) s'engrenant avec une roue fixe commune (13) du premier groupe ou du deuxième groupe de roues fixes, en formant ainsi une dépendance ; et
- les pignons fous (32, 33, 34, 35, 42, 43, 44, 45) pouvant être commutés par des embrayages de changement de vitesse (36, 37, 46, 47) de manière solidaire en rotation au premier ou au deuxième arbre intermédiaire (30, 40) ;
- dans les deux variantes de transmission, les pignons fous en relation de dépendance étant associés soit seulement aux rapports de marche avant pairs (II, IV, VI) soit seulement aux rapports de marche avant impairs (I, III, V, VII),
**caractérisé en ce que**
partant d'une première variante de transmission, la dépendance reste dans la même position, pour une deuxième variante de transmission, mais les pignons fous en relation de dépendance ont des diamètres différents, afin de réaliser des démultiplications différentes, au moins l'un des pignons fous en relation de dépendance étant associé dans la deuxième variante de transmission à un autre rapport de marche avant que dans la première variante de transmission.

2. Procédé selon la revendication 1, **caractérisé en ce que** la première variante de transmission présente une dépendance avec des pignons fous (33, 43) qui sont associés à un troisième rapport de marche avant (III) ou un cinquième rapport de marche avant (V), et **en ce que** la deuxième variante de transmission présente une dépendance avec des pignons fous (33, 43) qui sont associés au cinquième rapport de marche avant (V) ou à un septième rapport de marche avant (VII).

3. Procédé selon la revendication 1 ou 2, **caractérisé en ce que** les deux variantes de transmission présentent sept rapports de marche avant (I à VII).

4. Procédé selon l'une quelconque des revendications 1 à 3, **caractérisé en ce qu'**il existe une dépendance supplémentaire avec d'autres pignons fous (34, 44), qui sont associés aux rapports de marche avant pairs (IV, VI).

5. Procédé selon la revendication 4, **caractérisé en ce que** les pignons fous dans la relation de dépendance supplémentaire sont associés à un quatrième rapport de marche avant (IV) ou à un sixième rapport de marche avant (VI).

6. Procédé selon la revendication 1, **caractérisé en ce que** la première variante de transmission présente une dépendance avec des pignons fous qui sont associés à un quatrième rapport de marche avant ou à un sixième rapport de marche avant, et **en ce que** la deuxième variante de transmission présente une dépendance avec des pignons fous qui sont associés au sixième rapport de marche avant ou à un huitième rapport de marche avant.

7. Procédé selon la revendication 6, **caractérisé en ce qu'**il existe une dépendance supplémentaire avec d'autres pignons fous, qui sont associés à un troisième rapport de marche avant ou à un cinquième rapport de marche avant ou en variante au cinquième rapport de marche avant ou à un septième rapport de marche avant.
